# EUROPÄISCHE PATENTSCHRIFT

(11) **EP 0 780 555 B1**
(45) Veröffentlichungstag und Bekanntmachung des Hinweises auf die Patenterteilung: **12.09.2001**
(21) Anmeldenummer: 96118220.1
(22) Anmeldetag: 13.11.1996
(51) Int. Cl.: F02B 29/04

(54) **Brennkraftmaschine mit zwei parallel wirkenden Abgas-Turboladern**
Combustion engine with two parallel-operating turbochargers
Moteur à combustion avec deux turbocompresseurs fonctionnant en parallèle

(30) Priorität: 21.12.1995 DE 19547994
(43) Veröffentlichungstag der Anmeldung: 25.06.1997
(73) Patentinhaber: Bayerische Motoren Werke Aktiengesellschaft, 80788 München (DE)
(72) Erfinder: Landerl, Christian, Dr., 3363 Hausmening (AT)
(74) Vertreter: Bücken, Helmut

(56) Entgegenhaltungen:
- DE-A- 3 633 405
- DE-A- 3 929 124
- FR-A- 774 261
- FR-A- 2 006 595

## Beschreibung

Die Erfindung betrifft eine Brennkraftmaschine, insbesondere der V-Bauart, mit zumindest zwei parallel wirkenden Abgas-Turboladern, deren Förderluftstrom über Zuströmleitungen jeweils einem Ladeluftkühler zuführbar ist, von dem jeweils eine Rückleitung zur Sauganlage der Brennkraftmaschine führt, wobei ein schaltbarer Bypass zum Ladeluftkühler vorgesehen ist. Zum bekannten Stand der Technik wird beispielshalber auf die DE 32 14 205 A1 verwiesen.

Die Kühlung der Ladeluft, d. h. des beispielsweise von einem Abgasturbolader geförderten Ansaug-Luftstromes einer Brennkraftmaschine ist in nahezu sämtlichen Betriebszuständen der Brennkraftmaschine vorteilhaft, da auf Grund des bei einer niedrigeren Temperatur geringeren Volumens ein größerer Luftmassenstrom in die Brennkraftmaschinen-Zylinder gelangen kann. Unerwünscht ist die Kühlung der Ladeluft jedoch beim Kaltstart der Brennkraftmaschine sowie bei der sich an einen Kaltstart anschließenden Warmlaufphase, da hierdurch die an sich gewünschte rasche Erwärmung der Brennkraftmaschine auf ihre Betriebstemperatur hin verzögert wird. Als Abhilfemaßnahme ist es bekannt, beim Kaltstart sowie während der Warmlaufphase den Ladeluftkühler daher in einem Bypass zu umgehen. Insbesondere bei Brennkraftmaschinen mit mehreren parallel wirkenden Abgasturboladern - diese Anordnung findet man bevorzugt bei Brennkraftmaschinen der V-Bauart, wobei jeweils rechtsseitig sowie linksseitig der Brennkraftmaschine ein Abgasturbolader vorgesehen ist - stellen die dann mehrfach erforderlichen Bypass-Leitungen zu den ebenfalls mehrfach vorhandenen Ladeluftkühlern einen hohen Bauaufwand dar. Hierfür Abhilfemaßnahmen aufzuzeigen, ist Aufgabe der vorliegenden Erfindung.
Zur Lösung dieser Aufgabe ist vorgesehen, daß bei zugeschaltetem Bypass jeweils die Zuströmleitung des einen Ladeluftkühlers mit der Rückleitung des anderen Ladeluftkühlers verbunden ist. Vorteilhafte Aus- und Weiterbildungen sind Inhalt der Unteransprüche.

Näher erläutert wird die Erfindung anhand eines bevorzugten, in der beigefügten einzigen Prinzipskizze gezeigten Ausführungsbeispieles.
Dabei ist mit der Bezugsziffer 1 eine Brennkraftmaschine der V-Bauart bezeichnet, von der im wesentlichen nur die zwei Zylinderbänke 1a, 1b dargestellt sind. Den einzelnen Zylindern in den Zylinderbänken 1a, 1b wird die Verbrennungsluft über eine Sauganlage 2 zugeführt, während die Abgase wie üblich über Abgaskrümmer 3a, 3b abgeführt werden. An jeden Abgaskrümmer 3a, 3b schließt sich ein Abgasturbolader 4a, 4b an. Wie dem Fachmann bekannt, wird in diesen Abgasturboladern 4a, 4b ein Teil der im Abgasstrom enthaltenen Energie dazu genutzt, der Brennkraftmaschine 1 einen vergrößerten Frischluftstrom zuzuführen.

Hierzu besitzt jeder Abgasturbolader 4a, 4b ein Verdichterteil 5, in welches eine sich an eine Luftfiltereinheit 6 anschließende Zufuhrleitung 7 mündet. Der im Verdichterteil 5 komprimierte Luftstrom wird dann über eine sogenannte Zuströmleitung 8a bzw. 8b einem Ladeluftkühler 9a bzw. 9b zugeführt. Dabei ist für jeden Abgasturbolader 4a, 4b ein eigener Ladeluftkühler vorgesehen, so daß im vorliegenden Fall die Zuströmleitung 8a in einem Ladeluftkühler 9a und die Zuströmleitung 8b in einem Ladeluftkühler 9b mündet.

Nach Durchströmen des jeweiligen Ladeluftkühlers 9a bzw. 9b wird der Ansaugluftstrom der Brennkraftmaschine 1 schließlich über eine Rückleitung 10a - diese ist dem Ladeluftkühler 9a zugeordnet - bzw. über eine Rückleitung 10b (dem Ladeluftkühler 9b zuordnet) in die Sauganlage 2 eingeleitet. Die letztere kann als gemeinsame Sauganlage für beide Zylinderbänke 1a, 1b ausgebildet sein, es ist jedoch auch möglich, für jede Zylinderbank 1a bzw. 1b eine separate Sauganlage 2 vorzusehen. Alternativ kann auch eine zündfolgerichtig zugeordnete Sauganlage 2 vorgesehen sein.

Wie ersichtlich, sind die beiden Ladeluftkühler 9a, 9b im wesentlichen nebeneinander angeordnet und werden entsprechend der gezeigten Pfeilrichtung gegensinnig durchströmt. Die Zuströmleitung 8a für den der linken Zylinderbank 1a zugeordneten Ladeluftkühler 9a liegt somit in der Nähe der Rückleitung 10b des der rechten Zylinderbank 1b zugeordneten Ladeluftkühlers 9b. In gleicher Weise liegen die Zuströmleitung 8b sowie die Rückleitung 10a nahe beieinander. Dies ermöglicht es in besonders eleganter Weise, jeweils zwischen der Zuströmleitung 8a und der Rückleitung 10b bzw. zwischen der Zuströmleitung 8b und der Rückleitung 10a einen sogenannten Abzweig 11 vorzusehen, der die jeweils einander benachbarten Zuströmleitungen bzw. Rückleitungen miteinander verbindet. In jedem Abzweig 11 ist eine schaltbare Bypassklappe 12 vorgesehen, die in Abhängigkeit von ihrer Position den Abzweig 11 entweder freigibt und somit die Verbindung der jeweiligen Zuströmleitung 8a bzw. 8b mit der jeweiligen Rückleitung 10b bzw. 10a ermöglicht oder die den jeweiligen Abzweig 11 sperrt und somit keine Verbindung zwischen der jeweiligen Zuströmleitung mit der jeweiligen Rückleitung ermöglicht.

Sollen nun - wie eingangs erläutert - die beiden Ladeluftkühler 9a, 9b in einem Bypass umgangen werden, so ist es lediglich erforderlich, die beiden Bypassklappen 12 in den beiden Abzweigen 11 zu öffnen. Sodann fungiert die Rückleitung 10b als Bypassleitung zum Ladeluftkühler 9a, während die Rückleitung 10a die Funktion einer Bypassleitung zum Ladeluftkühler 9b übernimmt. (Nur zur besseren Darstellung nehmen in der Prinzipskizze die beiden Bypassklappen 12 unterschiedliche Stellungen ein; tatsächlich sind die beiden Abzweige 11 entweder gemeinsam geöffnet oder gemeinsam gesperrt). Dabei stellen sich die beschriebenen Strömungsverhältnisse aufgrund der Strömungswiderstände ein: Der Strömungswiderstand jedes Ladeluftkühlers 9a, 9b ist nämlich wesentlich höher als derjenige jeder Rückleitung 10a, 10b. Alternativ kann jedoch zusätzlich zur Bypassklappe 12 stromab des Abzweiges 11 in der Zuströmleitung 8a bzw. 8b eine weitere Klappe vorgesehen sein, die bei geöffneter Bypassklappe 12 geschlossen wird.

Indem somit bei zugeschaltetem Bypass jeweils die Zuströmleitung 8a bzw. 8b des einen Ladeluftkühlers 9a bzw. 9b mit der Rückleitung 10b bzw. 10a des anderen Ladeluftkühlers 9b bzw. 9a verbunden ist, werden separate Bypassleitungen zu den einzelnen Ladeluftkühlern 9a, 9b nicht benötigt. Da die Rückleitungen 10a bzw. 10b im Sinne einer vorteilhaften Funktionsvereinigung somit gleichzeitig als Bypassleitungen fungieren können, zeichnet sich die beschriebene Anordnung durch besondere Einfachheit bzw. durch einen äußerst geringen Bauaufwand aus.

Jede Bypassklappe 12 kann über eine entsprechende Vorrichtung mechanisch, elektrisch oder pneumatisch sowie beispielsweise auch kennfeldabhängig betätigt werden. Die beiden Ladeluftkühler 9a, 9b können selbstverständlich zu einer Baueinheit zusammengefaßt sein, können jedoch auch separate Bauteile darstellen. Daneben sind selbstverständlich eine Vielzahl weiterer Abwandlungen vom gezeigten Ausführungsbeispiel möglich, ohne den Inhalt der Patentansprüche zu verlassen.

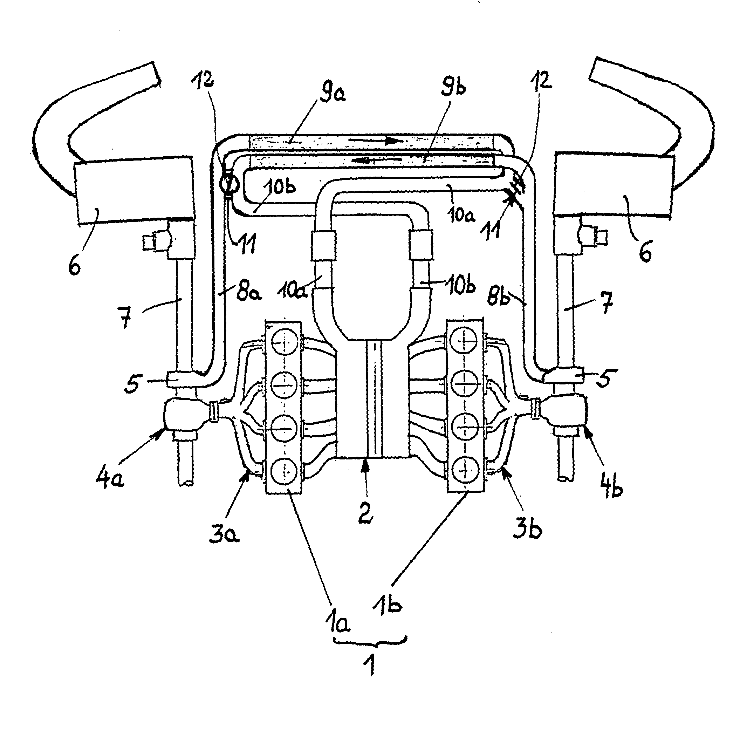

## Patentansprüche

1. Brennkraftmaschine, insbesondere der V-Bauart, mit zumindest zwei parallel wirkenden Abgasturboladern (4a, 4b), deren Förderluftstrom über Zuströmleitungen (8a, 8b) jeweils einem eigenen Ladeluftkühler (9a, 9b) zuführbar ist, von dem jeweils eine Rückleitung (10a, 10b) zur Sauganlage (2) der Brennkraftmaschine (1) führt, wobei ein schaltbarer Bypass zum Ladeluftkühler (9a, 9b) vorgesehen ist,
**dadurch gekennzeichnet, daß** bei zugeschaltetem Bypass jeweils die Zuströmleitung (8a bzw. 8b) des einen Ladeluftkühlers (9a bzw. 9b) mit der Rückleitung (10b bzw. 10a) des anderen Ladeluftkühlers (9b bzw. 9a) verbunden ist.

2. Brennkraftmaschine nach Anspruch 1,
**dadurch gekennzeichnet, daß** die im wesentlichen nebeneinander angeordneten Ladeluftkühler (9a, 9b) gegensinnig durchströmt werden, so daß jeweils die Zuströmleitung (8a, 8b) des einen und die Rückleitung (10b bzw. 10a) des anderen Ladeluftkühlers (9b, 9a) nahe beieinander liegen.

3. Brennkraftmaschine nach Anspruch 1 oder 2,
**dadurch gekennzeichnet, daß** jeweils in einem Abzweig (11) zwischen der Zuströmleitung (8a bzw. 8b) des einen und der Rückleitung (10b bzw.10a) des anderen Ladeluftkühlers eine schaltbare Bypassklappe (12) vorgesehen ist.

4. Brennkraftmaschine nach Anspruch 3,
**dadurch gekennzeichnet, daß** in der Zuströmleitung (8a bzw. 8b) stromab des Abzweiges (11) eine bei geöffneter Bypassklappe (12) geschlossene Klappe vorgesehen ist.

## Claims

1. An internal combustion engine, especially V-type, comprising at least two parallel operating exhaust-gas turbochargers (4a, 4b) delivering an airstream for supplying via flow pipes (8a, 8b) to a respective individual charge cooler (9a, 9b) from which a respective return pipe (10a, 10b) leads to the intake system (2) of the engine (1), a switchable bypass to the charge cooler (9a, 9b) being provided,
**characterised in that** when the bypass is switched on, the flow pipe (8a or 8b) of each charge cooler (9a or 9b) is connected to the return pipe (10b or 10a) of the other charge cooler (9b, 9a).

2. An engine according to claim 1,
**characterised in that** the charge coolers (9a, 9b) disposed substantially side by side are flowed through in opposite directions, so that the flow equalising pipe (8a, 8b) of one charge cooler (9b, 9a) lies alongside the return pipe (10b or 10a) from the other charge cooler (9b, 9a).

3. An engine according to claim 1 or claim 2,
**characterised in that** a switchable bypass valve (12) is provided in each branch (11) between the flow pipe (8a or 8b) of one charge cooler and the return pipe (10b or 10a) of the other charge cooler.

4. An engine according to claim 3,
**characterised in that** a valve which is closed when the bypass valve (12) is opened is provided in the flow pipe (8a or 8b) downstream of the branch (11).

## Revendications

1. Moteur thermique, notamment de type en V, ayant au moins deux turbocompresseurs de gaz d'échappement (4a, 4b) travaillant en parallèle et dont le débit d'air est envoyé par des conduites d'entrée (8a, 8b) chaque fois à un radiateur d'air de refroidissement (9a, 9b) indépendant, relié par une conduite de retour (10a, 10b) à l'installation d'aspiration (2) du moteur thermique (1),
une dérivation commutable étant prévue pour le radiateur d'air d'alimentation (9a, 9b),
**caractérisé en ce que**
lorsque la dérivation est mise en oeuvre, la conduite d'alimentation (8a, 8b) d'un radiateur d'air d'alimentation (9a, 9b) est reliée à la conduite de retour (10b, 10a) de l'autre radiateur d'air d'alimentation (9b, 9a).

2. Moteur thermique selon la revendication 1,
**caractérisé en ce que**
les radiateurs d'air d'alimentation (9a, 9b) qui sont essentiellement juxtaposés, sont traversés à contre-courant, de sorte que chaque fois la conduite d'entrée (8a, 8b) de l'un et la conduite de retour (10b, 10a) de l'autre radiateur d'air d'alimentation (9b, 9a) sont voisines.

3. Moteur thermique selon la revendication 1 ou 2,
**caractérisé en ce que**
chaque fois dans une dérivation (11) entre la conduite d'alimentation (8a, 8b) d'un radiateur d'air de refroidissement et la conduite de retour (10b, 10a) de l'autre, il est prévu un volet de dérivation commuté (12).

4. Moteur thermique selon la revendication 3,
**caractérisé en ce que**
dans la conduite d'entrée (8a, 8b) en aval de la dérivation (11), il est prévu un volet fermé lorsque le volet de dérivation (12) est ouvert.
